# EUROPEAN PATENT SPECIFICATION

(11) **EP 3 904 196 B1**
(45) Date of publication and mention of the grant of the patent: **28.02.2024**
(21) Application number: 19906121.9
(22) Date of filing: 24.12.2019
(51) Int. Cl.: B63B 25/16, F17C 3/08, B65D 90/02

(54) **SHIP**
SCHIFF
NAVIRE

(30) Priority: 28.12.2018 JP 2018247352
(43) Date of publication of application: 03.11.2021
(73) Proprietor: Kawasaki Jukogyo Kabushiki Kaisha, Hyogo 650-8670 (JP)
(72) Inventor: GOKAN, Kazuto, Hyogo, 650-8670 (JP); SHINGO, Masashi, Hyogo, 650-8670 (JP)
(74) Representative: Dehns
(86) International application number: PCT/JP2019/050456
(87) International publication number: WO 2020/138016

(56) References cited:
- WO-A1-2012/132450
- WO-A1-2014/203470
- FR-A1- 2 535 831
- JP-A- H02 249 796
- JP-A- 2012 183 864
- JP-A- 2014 118 206
- JP-A- 2014 118 206
- JP-B2- S 586 115
- JP-B2- S6 212 553
- US-A- 5 526 678
- US-A1- 2016 341 360
- US-A1- 2017 299 118
- NISHIMURA, MOTOHIKO: "Long Distance Transportation of LH2 - Hydrogen Road", KAWASAKI HEAVY INDUSTRIES, LTD, 28 February 2017 (2017-02-28), XP055723980, Retrieved from the Internet: URL:http://injapan.no/wp-content/uploads/2 017/02/11-KHI-Hydrogen-Road.pdf [retrieved on 2020-03-09]
- KAMIYA, SHOJI et al.: "Study on Introduction of C02 Free Energy to Japan with Liquid Hydrogen", Physics Procedia, vol. 67, 2015, pages 11-19, XP055723981, ISSN: 1875-3892
- KAMIYA, SHOJI: "Hydrogen Production and CO2 Free Hydrogen Energy Chain", The Journal of the Institute of Electrical Installation Engineers of Japan, vol. 36, no. 4, 10 April 2016 (2016-04-10) , pages 227-230, XP055723982, DOI: 10.14936/ieiej.36.227
- Kamiya, Shoji: "Initiatives for Kawasaki Heavy Industries hydrogen business", Denki, vol. 778, 21 August 2015 (2015-08-21), pages 28-31, XP009529074, ISSN: 0285-5151
- Shoji Kamiya, Kozo Sunano, Daisuke Kaya: "Technologies of Hydrogen Liquefaction, Transport and Storage -Paving the Way to a Hydrogen Fueled Future", Kawasaki Technical Review, vol. 176, 1 October 2015 (2015-10-01), pages 34-39, XP009529060, ISSN: 0387-7906
- "World's First Liquefied Hydrogen Carrier 'SUISO FRONTIER' Launches", Kawasaki Heavy Industries, Ltd., 11 December 2019 (2019-12-11), XP055723989, Retrieved from the Internet: URL:URL:https://www.khi.co.jp/pressrelease /detail/20191211_1.html [retrieved on 2020-03-09]

## Description

### Technical Field

The present invention relates to a ship including a double-shell tank.

### Background Art

Conventionally, there has been known a ship including a double-shell tank that stores low-temperature fluid such as liquefied gas and includes an inner shell and an outer shell with a vacuum space formed therebetween. For example, in a ship disclosed in Patent Literature 1, a double-shell tank installed in a hull is covered by a ceiling wall (tank cover in Patent Literature 1) from the upper side, and a holding space to be filled with inert gas such as nitrogen is formed between the hull and the ceiling wall.
FR 2 535 831 A1 discloses an insulated tank for transporting liquified gasses within a vessel, the tank comprises a first insulation volume surrounding the tank and a second insulation volume surrounding the first insulation volume. A pumping device is connected to the second insulation volume.

### Citation List

### Patent Literature

PTL 1: WO2014/203530

### Summary of Invention

### Technical Problem

In the double-shell tank including the inner shell and the outer shell with the vacuum space formed therebetween as described above, it is necessary to additionally evacuate the vacuum space by using a vacuum pump, when the degree of vacuum in the vacuum space is deteriorated (the pressure is increased).

In view of the above, an object of the present invention is to provide a ship that makes it possible to easily perform such an additional evacuating work.

### Solution to Problem

In order to solve the above-described problem, a ship according to the present invention includes: a hull; a double-shell tank installed in the hull and including an inner shell and an outer shell with a vacuum space formed therebetween; a ceiling wall covering the double-shell tank from an upper side; and a first exhaust pipe including one end connected to the double-shell tank so as to communicate with the vacuum space, and another end that is an exhaust port connectable to a vacuum pump to be placed on the ceiling wall, the exhaust port being located above the ceiling wall; wherein the outer shell includes: an outer shell main part positioned under the ceiling wall; and an outer shell dome protruding upward from the outer shell main part and penetrating the ceiling wall, and the inner shell includes: an inner shell main part surrounded by the outer shell main part; and an inner shell dome surrounded by the outer shell dome and protruding upward from the inner shell main part, the ship further comprises: a partition member disposed between the inner shell dome and the outer shell dome, and partitioning off the vacuum space into an upper region and a lower region; and a second exhaust pipe disposed in a holding space formed between the hull and the ceiling wall, the second exhaust pipe including one end connected to the outer shell main part so as to communicate with the lower region of the vacuum space, and another end that is an exhaust port for connecting a vacuum pump, and the one end of the first exhaust pipe is connected to the outer shell dome at a position above the ceiling wall, so as to communicate with the upper region of the vacuum space, and the exhaust port of the second exhaust pipe is located between a pair of saddles supporting the outer shell main part.

According to the above configuration, at the time of performing an additional evacuating work, it is only necessary to place the vacuum pump on the ceiling wall and connect the vacuum pump to the exhaust port. Thus, it is possible to easily perform the additional evacuating work.

The exhaust port is positioned above the ceiling wall. According to this configuration, a work for connecting the vacuum pump to the exhaust port can also be performed on the upper side of the ceiling wall.

The inner shell includes: an inner shell main part surrounded by the outer shell main part; and an inner shell dome surrounded by the outer shell dome and protruding upward from the inner shell main part. The ship further includes: a partition member disposed between the inner shell dome and the outer shell dome, and partitioning off the vacuum space into an upper region and a lower region; and a second exhaust pipe disposed in a holding space formed between the hull and the ceiling wall, the second exhaust pipe including one end connected to the outer shell main part so as to communicate with the lower region of the vacuum space, and another end that is an exhaust port for connecting a vacuum pump. The one end of the first exhaust pipe is connected to the outer shell dome at a position above the ceiling wall, so as to communicate with the upper region of the vacuum space. According to this configuration, although an additional evacuating work for the lower region of the vacuum space needs to be performed in the holding space, an additional evacuating work for the upper region of the vacuum space can be easily performed on the upper side of the ceiling wall.

The ship may further include a plurality of upper vacuum gauges that are attached to the outer shell dome at positions above the ceiling wall and detect a degree of vacuum in the upper region of the vacuum space. The plurality of upper vacuum gauges may be arranged at equal angular intervals around the outer shell dome. According to this configuration, since the upper vacuum gauges are arranged at equal angular intervals around the outer shell dome, the degree of vacuum in the upper region of the vacuum space can be monitored not locally but over the entirety. Moreover, since the upper vacuum gauges are positioned above the ceiling wall, the upper vacuum gauges can be easily replaced.

The outer shell main part may have a cylindrical shape, an axial direction thereof being parallel to a ship length direction, and may be supported by a pair of saddles spaced apart from each other in the ship length direction. The ship may further include a plurality of lower vacuum gauges that are attached to the outer shell main part on both sides of the pair of saddles and detect a degree of vacuum in the lower region of the vacuum space. According to this configuration, since the lower vacuum gauges are positioned on both sides of the pair of saddles, the degree of vacuum in the lower region of the vacuum space can be monitored not locally but over the entirety, and the lower vacuum gauges can be easily replaced.

### Advantageous Effects of Invention

The present invention makes it possible to easily perform the additional evacuating work.

### Brief Description of Drawings

FIG. 1 is a side view of a ship according to one embodiment of the present invention.
FIG. 2 is a longitudinal sectional view of a part of the ship shown in FIG. 1.
FIG. 3 is a cross-sectional view taken along line III-III of FIG. 2.
FIG. 4 is a plan view of an outer shell dome.
FIG. 5 is a sectional view of a part of a ship according to a modification.
FIG. 6 is a sectional view of a part of a ship according to another modification.

### Description of Embodiments

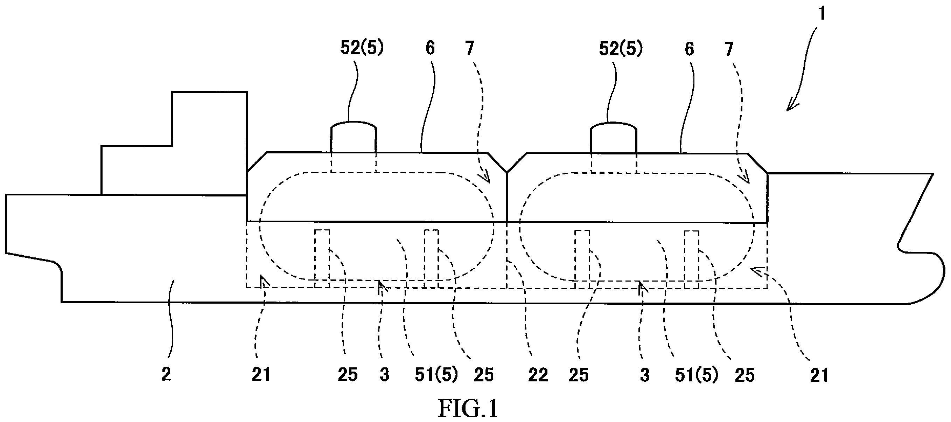

FIG. 1 shows a ship 1 according to one embodiment of the present invention. The ship 1 includes a hull 2 and two double-shell tanks 3 installed in the hull 2. In the present embodiment, the double-shell tanks 3 are cargo tanks for low-temperature fluid transportation. In the present embodiment, the double-shell tanks 3 are arranged in the ship length direction. However, in a case where the ship width is great, the double-shell tanks 3 may be arranged in the ship width direction. The number of the double-shell tanks 3 installed in the hull 2 may be one, or three or more.

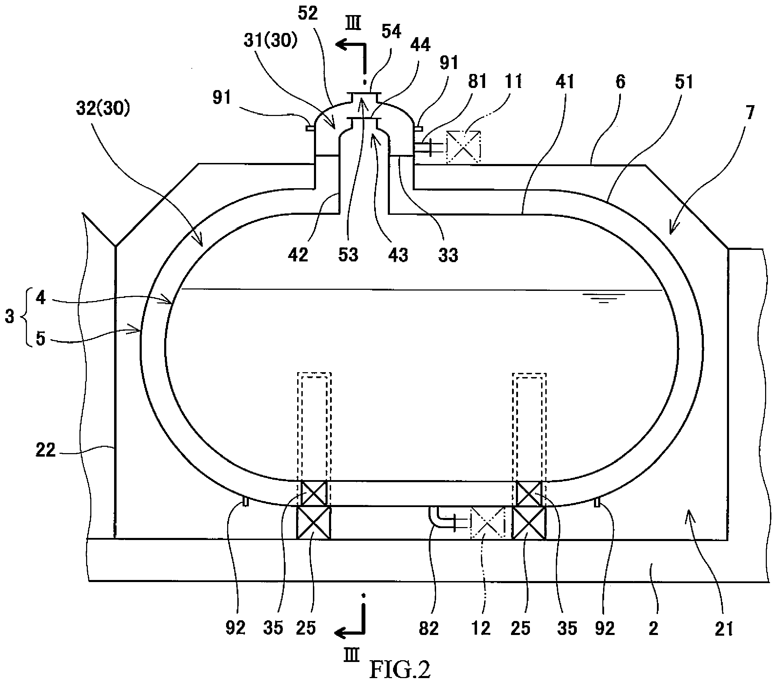

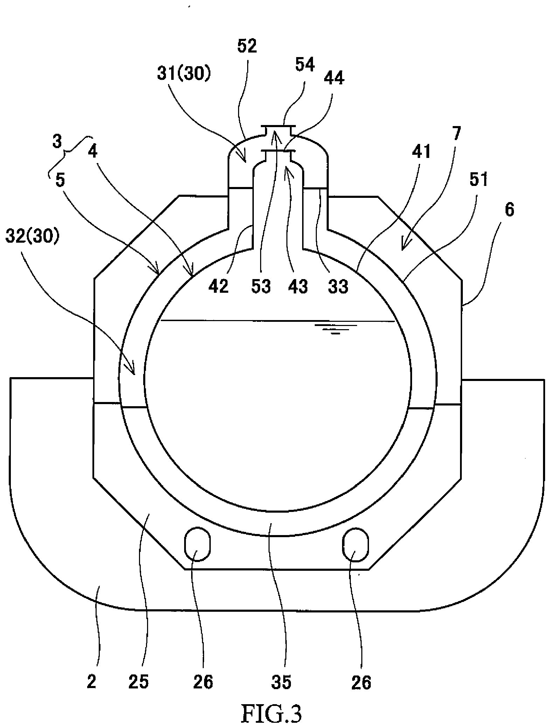

The two double-shell tanks 3 have the same structure. As shown in FIG. 2 and FIG. 3, each double-shell tank 3 includes an inner shell 4 for storing low-temperature fluid such as liquefied gas, and an outer shell 5 enclosing the inner shell 4. A vacuum space 30 is formed between the inner shell 4 and the outer shell 5.

For example, in the vacuum space 30, the outer surface of the inner shell 4 may be covered by a vacuum thermal insulator (e.g., a sheet in which radiation shield films and spacers are layered alternately), and a gap where no objects are present may be formed between the vacuum thermal insulator and the inner surface of the outer shell 5. Alternatively, the vacuum space 30 may be filled with pearlite which is a granular thermal insulator.

For example, the liquefied gas is liquefied petroleum gas (LPG, about -45°C), liquefied ethylene gas (LEG, about -100°C), liquefied natural gas (LNG, about -160°C), liquefied oxygen (LO₂, about -180°C), liquefied hydrogen (LH₂, about -250°C), or liquefied helium (LHe, about -270°C). However, the low-temperature fluid stored in the inner shell 4 need not be liquid, but may be gas.

To be more specific, the inner shell 4 includes an inner shell main part 41 having a horizontally long cylindrical shape, and an inner shell dome 42 protruding upward from the inner shell main part 41. In the present embodiment, the axial direction of the inner shell main part 41 is parallel to the ship length direction. In the present embodiment, the axial direction of the inner shell dome 42 is parallel to the vertical direction. Alternatively, the axial direction of the inner shell dome 42 may be slightly inclined relative to the vertical direction.

The outer shell 5 includes an outer shell main part 51 and an outer shell dome 52. The outer shell main part 51 surrounds the inner shell main part 41 and has a horizontally long cylindrical shape. The outer shell dome 52 surrounds the inner shell dome 42 and protrudes upward from the outer shell main part 51. That is, the axial direction of the outer shell main part 51 is parallel to the ship length direction, similar to the inner shell main part 41, and the axial direction of the outer shell dome 52 is parallel to the vertical direction, similar to the inner shell dome 42.

However, the inner shell main part 41 and the outer shell main part 51 need not have horizontally long cylindrical shapes, but may have vertically long cylindrical shapes. Alternatively, the inner shell main part 41 and the outer shell main part 51 may have spherical shapes, cubic shapes, or rectangular parallelepiped shapes.

In the hull 2, two cargo holds 21 that open upward are formed. The cargo holds 21 are arranged in the ship length direction. The cargo holds 21 are partitioned from each other by a bulkhead 22. A lower part of the double-shell tank 3 is inserted in each cargo hold 21.

In each cargo hold 21, a pair of saddles 25 spaced apart from each other in the ship length direction are provided. The saddles 25 support the outer shell main part 51 of the outer shell 5 of the double-shell tank 3. In addition, a pair of support members 35 supporting the inner shell main part 41 are provided between the inner shell 4 and the outer shell 5 of the double-shell tank 3. In the present embodiment, the support members 35 are provided at the same positions as the saddles 25. Alternatively, the support members 35 may be provided at positions different from the saddles 25.

A tank cover 6 (corresponding to a ceiling wall in the present invention) is disposed above each double-shell tank 3. Each tank cover 6 covers the corresponding double-shell tank 3 from the upper side, and thus a holding space 7 to be filled with inert gas is formed between the tank cover 6 and the hull 2. The outer shell main part 51 of the outer shell 5 described above is positioned under the tank cover 6, and the outer shell dome 52 penetrates the tank cover 6.

As the inert gas to fill the holding space 7, nitrogen, argon, or the like can be used. The inert gas serves to prevent the holding space 7 from having a negative pressure and to prevent condensation on the surface of the double-shell tank 3. In particular, in a case where the low-temperature fluid stored in the inner shell 4 is liquefied hydrogen, the inert gas filling the holding space 7 also serves to prevent liquefied oxygen from being generated around the double-shell tank 3.

It should be noted that the holding space 7 may be filled with gas (e.g., dry air) other than inert gas. Alternatively, the holding space 7 may be filled with no such gas, and gas in the holding space 7 may be normal air.

The inner shell dome 42 and the outer shell dome 52 are parts for putting various pipes such as a low-temperature fluid transportation pipe and an electric pipe, and these pipes penetrate the inner shell dome 42 and the outer shell dome 52. At the top portions of the inner shell dome 42 and the outer shell dome 52, manholes 43, 53 are provided, respectively, so as to allow a person to pass therethrough at the time of inspection or the like. The manholes 43, 53 are sealed by covers 44, 54, respectively. The positions of the manholes 43, 53 may be changed as appropriate.

A partition member 33 is disposed between the inner shell dome 42 and the outer shell dome 52. The partition member 33 is intended for keeping a major part of the vacuum space 30 vacuum when the cover 54 is detached from the outer shell dome 52 and the manhole 53 is opened. The partition member 33 partitions off the vacuum space 30 into an upper region 31 including the internal space of the manhole 53, and a lower region 32 enclosing the inner shell main part 41 overall.

In FIG. 2 and FIG. 3, the partition member 33 is disposed between the peripheral wall portions of the inner shell dome 42 and the outer shell dome 52, and has a flat ring shape. However, the position and the shape of the partition member 33 may be changed as appropriate. For example, the partition member 33 may be disposed between the top portions of the inner shell dome 42 and the outer shell dome 52, and have a cylindrical shape.

Further, in the present embodiment, a configuration for additionally evacuating each of the upper region 31 and the lower region 32 of the vacuum space 30, and a configuration for detecting the degree of vacuum in each of the upper region 31 and the lower region 32, are adopted.

The configurations for additionally evacuating the upper region 31 and the lower region 32 of the vacuum space 30 include a first exhaust pipe 81 and a second exhaust pipe 82, respectively (see FIG. 2). The configurations for detecting the degrees of vacuum in the upper region 31 and the lower region 32 include a plurality of upper vacuum gauges 91 and a plurality of lower vacuum gauges 92, respectively (see FIG. 2).

In the present embodiment, the first exhaust pipe 81 is disposed above the tank cover 6, and the second exhaust pipe 82 is disposed under the double-shell tank 3 in the holding space 7. Specifically, the first exhaust pipe 81 extends in the horizontal direction from the peripheral wall portion of the outer shell dome 52, and the second exhaust pipe 82 extends in the downward direction from the bottom of the outer shell main part 51 and then extends in the horizontal direction.

To be more specific, one end of the first exhaust pipe 81 is connected to the outer shell dome 52 at a position above the tank cover 6, so as to communicate with the upper region 31 of the vacuum space 30. Another end of the first exhaust pipe 81 is an exhaust port connectable to a vacuum pump 11 to be placed on the tank cover 6, and is sealed by a cover in a normal case. At the time of performing an additional evacuating work for the upper region 31, the cover is detached from the first exhaust pipe 81 and then the vacuum pump 11 is connected to the other end (exhaust port) of the first exhaust pipe 81.

In the present embodiment, the second exhaust pipe 82 is positioned between the pair of saddles 25. One end of the second exhaust pipe 82 is connected to the outer shell main part 51, so as to communicate with the lower region 32 of the vacuum space 30. Another end of the second exhaust pipe 82 is an exhaust port connectable to a vacuum pump 12 to be placed on the ship bottom, and is sealed by a cover in a normal case. At the time of performing an additional evacuating work for the lower region 32, the cover is detached from the second exhaust pipe 82 and then the vacuum pump 12 is connected to the other end (exhaust port) of the second exhaust pipe 82.

As shown in FIG. 3, each saddle 25 is provided with openings 26 that allow a person to pass therethrough. At the time of performing the additional evacuating work for the lower region 32, the inert gas in the holding space 7 is replaced with air, and then the vacuum pump 12 is conveyed through the opening 26 of the saddle 25 to between the pair of saddles 25.

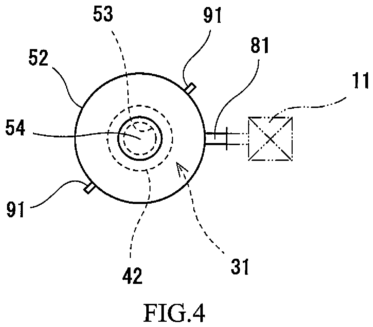

With reference to FIG. 2 again, the plurality of upper vacuum gauges 91 described above are attached to the outer shell dome 52 at positions above the tank cover 6. The upper vacuum gauges 91 detect the degree of vacuum in the upper region 31 of the vacuum space 30. In the present embodiment, as shown in FIG. 4, two upper vacuum gauges 91 are provided, and are arranged at equal angular intervals (180-degree intervals in the present embodiment) around the outer shell dome 52. However, the number of the upper vacuum gauges 91 may be three or more.

With reference to FIG. 2 again, the plurality of lower vacuum gauges 92 are attached to the outer shell main part 51 on both sides of the pair of saddles 25. In other words, the pair of saddles 25 are located between the plurality of lower vacuum gauges 92. The lower vacuum gauges 92 detect the degree of vacuum in the lower region 32 of the vacuum space 30. Although not shown, the lower vacuum gauges 92 are desirably arranged symmetrically with respect to the center of the outer shell main part 51 in a plan view.

As described above, in the ship 1 according to the present embodiment, at the time of performing the additional evacuating work for the upper region 31 of the vacuum space 30, it is only necessary to place the vacuum pump 11 on the tank cover 6 and connect the vacuum pump 11 to the exhaust port that is the other end of the first exhaust pipe 81. For example, in a state in which the ship 1 is moored at a quay or placed in a dock, the vacuum pump 11 is placed on the tank cover 6 by a crane. Thus, it is possible to easily perform the additional evacuating work for the upper region 31 of the vacuum space 30. That is, although the additional evacuating work for the lower region 32 of the vacuum space 30 needs to be performed in the holding space 7, the additional evacuating work for the upper region 31 can be easily performed on the upper side of the tank cover 6. In addition, at the time of performing the additional evacuating work for the upper region 31 of the vacuum space 30, it is not necessary to open the holding space 7 filled with the inert gas.

Furthermore, in the present embodiment, the upper vacuum gauges 91 are arranged at equal angular intervals around the outer shell dome 52. Therefore, the degree of vacuum in the upper region 31 of the vacuum space 30 can be monitored not locally but over the entirety. Moreover, since the upper vacuum gauges 91 are positioned above the tank cover 6, the upper vacuum gauges 91 can be easily replaced.

Furthermore, in the present embodiment, the lower vacuum gauges 92 are positioned on both sides of the pair of saddles 25. Therefore, the degree of vacuum in the lower region 32 of the vacuum space 30 can be monitored not locally but over the entirety. Moreover, at the time of replacing the lower vacuum gauges 92, it is not necessary to pass through the openings 26 of the saddles 25, and therefore the lower vacuum gauges 92 can be easily replaced.

### (Variations)

The present invention is not limited to the above-described embodiment. Various modifications can be made without departing from the scope of the present invention defined by the appended claims.

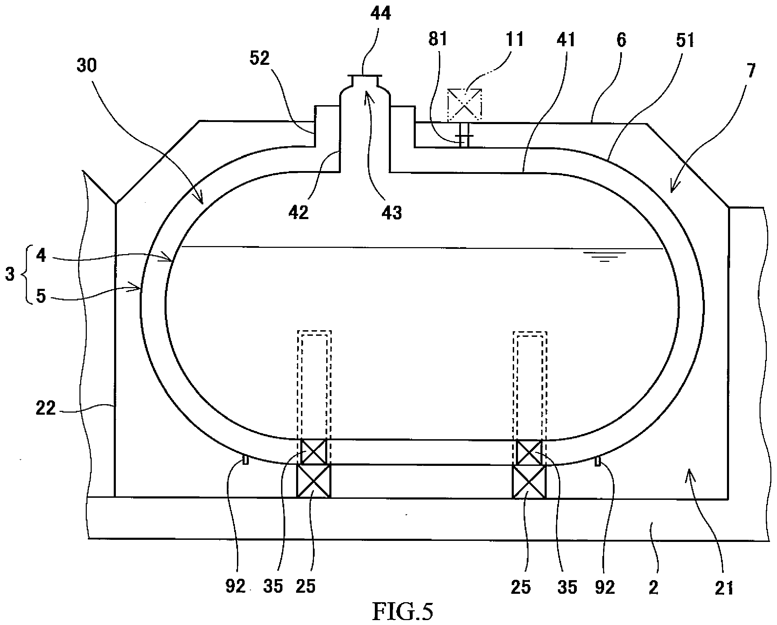

Furthermore, as shown in FIG. 5, the exhaust port may be positioned on the same plane as the tank cover 6 so as to open on the tank cover 6. However, if the exhaust pipe 81 penetrates the tank cover 6 and the exhaust port is positioned above the tank cover 6, a work for connecting the vacuum pump 11 to the exhaust port can also be performed on the upper side of the tank cover 6.

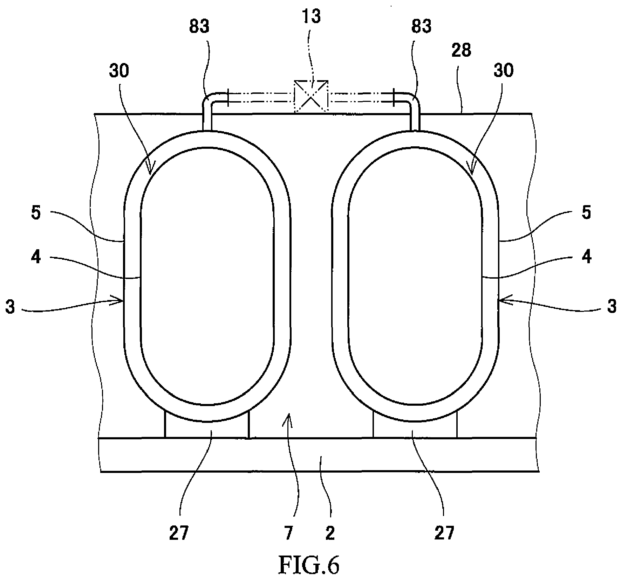

In addition, the ceiling wall in the present invention need not be the tank cover 6. For example, as shown in FIG. 6, in a case where the double-shell tanks 3 are fuel tanks disposed in the hull 2 (in FIG. 6, these tanks are supported by support members 27), the ceiling wall in the present invention may be an upper deck 28.

In the configuration shown in FIG. 6, an exhaust pipe 83 extends upward from the top portion of the outer shell 5 of each double-shell tank 3 and penetrates the upper deck 28. One end at the lower side of the exhaust pipe 83 is connected to the outer shell 5, so as to communicate with the vacuum space 30. Another end at the upper side of the exhaust pipe 83 is an exhaust port connectable to a vacuum pump 13 to be placed on the upper deck 28. At the time of performing additional evacuation, the vacuum pump 13 is connected to the exhaust port.

### Reference Signs List

- 1: ship
- 2: hull
- 25: saddle
- 28: upper deck (ceiling wall)
- 3: double-shell tank
- 30: vacuum space
- 31: upper region
- 32: lower region
- 33: partition member
- 4: inner shell
- 41: inner shell main part
- 42: inner shell dome
- 5: outer shell
- 51: outer shell main part
- 52: outer shell dome
- 6: tank cover (ceiling wall)
- 7: holding space
- 81: first exhaust pipe
- 82: second exhaust pipe
- 83: exhaust pipe
- 91: upper vacuum gauge
- 92: lower vacuum gauge

## Claims

1. A ship (1) comprising:
a hull (2);
a double-shell tank (3) installed in the hull (2) and including an inner shell (4) and an outer shell (5) with a vacuum space (30) formed therebetween;
a ceiling wall (6) covering the double-shell tank (3) from an upper side; and
a first exhaust pipe (81) including one end connected to the double-shell tank (3) so as to communicate with the vacuum space (30), and another end that is an exhaust port connectable to a vacuum pump (11) to be placed on the ceiling wall (6), the exhaust port being located above the ceiling wall (6); wherein:
the outer shell (5) includes:
an outer shell main part (51) positioned under the ceiling wall (6); and
an outer shell dome (52) protruding upward from the outer shell main part (51) and penetrating the ceiling wall (6),
the inner shell (4) includes:
an inner shell main part (41) surrounded by the outer shell main part (51); and
an inner shell dome (42) surrounded by the outer shell dome (52) and protruding upward from the inner shell main part (41),
the ship (1) further comprises:
a partition member (33) disposed between the inner shell dome (42) and the outer shell dome (52), and partitioning off the vacuum space (30) into an upper region (31) and a lower region (32); and
a second exhaust pipe (82) disposed in a holding space (7) formed between the hull (2) and the ceiling wall (6), the second exhaust pipe (82) including one end connected to the outer shell main part (51) so as to communicate with the lower region (32) of the vacuum space (30), and another end that is an exhaust port for connecting a vacuum pump (12), wherein
the one end of the first exhaust pipe (81) is connected to the outer shell dome (51) at a position above the ceiling wall (6) so as to communicate with the upper region (31) of the vacuum space (30), and
the exhaust port of the second exhaust pipe (82) is located between a pair of saddles (25) supporting the outer shell main part (51).

2. The ship (1) according to claim 1, further comprising a plurality of upper vacuum gauges (91) that are attached to the outer shell dome (52) at positions above the ceiling wall (6) and detect a degree of vacuum in the upper region (31) of the vacuum space (30), wherein
the plurality of upper vacuum gauges (91) are arranged at equal angular intervals around the outer shell dome (52).

3. The ship (1) according to claim 1 or 2, wherein
the outer shell main part (51) has a cylindrical shape, an axial direction thereof being parallel to a ship length direction, and the pair of saddles (25) are spaced apart from each other in the ship length direction, and
the ship (1) further comprises a plurality of lower vacuum gauges (92) that are attached to the outer shell main part (51) on both sides of the pair of saddles (25) and detect a degree of vacuum in the lower region (32) of the vacuum space (30).

## Patentansprüche

1. Schiff (1), umfassend:
einen Rumpf (2);
einen doppelhülligen Tank (3), der in dem Rumpf (2) installiert ist und eine Innenhülle (4) und eine Außenhülle (5) mit einem dazwischen gebildeten Vakuumraum (30) beinhaltet;
eine Deckenwand (6), die den doppelhülligen Tank (3) von einer Oberseite aus abdeckt; und
ein erstes Abgasrohr (81), das ein Ende, das mit dem doppelhülligen Tank (3) verbunden ist, um mit dem Vakuumraum (30) zu kommunizieren, und ein anderes Ende beinhaltet, das ein Abgasrohr ist, das mit einer Vakuumpumpe (11) verbunden werden kann, die auf der Deckenwand (6) platziert wird, wobei sich das Abgasrohr über der Deckenwand (6) befindet; wobei:
die Außenhülle (5) beinhaltet:
einen Außenhüllenhauptteil (51), der unter der Deckenwand (6) positioniert ist; und
eine Außenhüllenkuppel (52), die von dem Außenhüllenhauptteil (51) nach oben ragt und die Deckenwand (6) durchdringt,
die Außenhülle (4) beinhaltet:
einen Innenhüllenhauptteil (41), der von dem Außenhüllenhauptteil (51) umgeben ist; und
eine Innenhüllenkuppel (42), die von der Außenhüllenkuppel (52) umgeben ist und von dem Innenhüllenhauptteil (41) nach oben ragt,
das Schiff (1) weiter Folgendes umfasst:
ein Trennelement (33), das zwischen der Innenhüllenkuppel (42) und der Außenhüllenkuppel (52) angeordnet ist und den Vakuumraum (30) in einen oberen Bereich (31) und einen unteren Bereich (32) trennt; und
ein zweites Abgasrohr (82), das in einem Halteraum (7) angeordnet ist, der zwischen dem Rumpf (2) und der Deckenwand (6) gebildet ist, wobei das zweite Abgasrohr (82) ein Ende, das mit dem Außenhüllenhauptteil (51) verbunden ist, um mit dem unteren Bereich (32) des Vakuumraums (30) zu kommunizieren, und ein anderes Ende beinhaltet, das ein Abgasanschluss zur Verbindung mit einer Vakuumpumpe (12) ist, wobei
das eine Ende des ersten Abgasrohrs (81) mit der Außenhüllenkuppel (51) bei einer Position über der Deckenwand (6) verbunden ist, um mit dem oberen Bereich (31) des Vakuumraums (30) zu kommunizieren, und
der Abgasanschluss des zweiten Abgasrohrs (82) sich zwischen einem Paar von Satteln (25) befindet, das den Außenhüllenhauptteil (51) stützt.

2. Schiff (1) nach Anspruch 1, weiter umfassend eine Vielzahl von oberen Vakuummessgeräten (91), die an der Außenhüllenkuppel (52) bei Positionen über der Deckenwand (6) angebracht sind und einen Grad an Vakuum in dem oberen Bereich (31) des Vakuumraums (30) erfassen, wobei
die Vielzahl oberer Vakuummessgeräte (91) bei gleichwinkeligen Intervallen um die Außenhüllenkuppel (52) angeordnet sind.

3. Schiff (1) nach Anspruch 1 oder 2, wobei
der Außenhüllenhauptteil (51) eine zylindrische Form aufweist, wobei eine Achsrichtung davon parallel zu einer Schiffslängsachse ist und das Paar von Satteln (25) voneinander in der Schiffslängsrichtung beabstandet ist, und
das Schiff (1) weiter eine Vielzahl von unteren Vakuummessgeräten (92) umfasst, die an dem Außenhüllenhauptteil (51) an beiden Seiten des Paars von Satteln (25) angebracht sind und einen Grad von Vakuum in dem unteren Bereich (32) des Vakuumraums (30) erfassen.

## Revendications

1. Navire (1) comprenant :
une coque (2) ;
un réservoir à double coque (3) installé dans la coque (2) et incluant une coque interne (4) et une coque externe (5) avec un espace sous vide (30) formé entre elles ;
une paroi de vaigrage (6) couvrant le réservoir à double coque (3) à partir d'un côté supérieur ; et
un premier tuyau d'échappement (81) incluant une extrémité raccordée au réservoir à double coque (3) de sorte à communiquer avec l'espace sous vide (30) et une autre extrémité qui est un orifice d'échappement pouvant être raccordé à une pompe à vide (11) à placer sur la paroi de vaigrage (6), l'orifice d'échappement étant situé au-dessus de la paroi de vaigrage (6) ; dans lequel
la coque externe (5) inclut :
une partie principale de coque externe (51) positionnée sous la paroi de vaigrage (6) ; et
un dôme de coque externe (52) faisant saillie vers le haut depuis la partie principale de coque externe (51) et pénétrant dans la paroi de vaigrage (6),
la coque interne (4) inclut :
une partie principale de coque interne (41) entourée par la partie principale de coque externe (51) ; et
un dôme de coque interne (42) entouré par le dôme de coque externe (52) et faisant saillie vers le haut depuis la partie principale de coque interne (41),
le navire (1) comprend en outre :
un élément de séparation (33) disposé entre le dôme de coque interne (42) et le dôme de coque externe (52) et séparant par une cloison l'espace sous vide (30) en une région supérieure (31) et une région inférieure (32) ; et
un second tuyau d'échappement (82) disposé dans un espace de réception (7) formé entre la coque (2) et la paroi de vaigrage (6), le second tuyau d'échappement (82) incluant une extrémité raccordée à la partie principale de coque externe (51) de sorte à communiquer avec la région inférieure (32) de l'espace sous vide (30) et une autre extrémité qui est un orifice d'échappement pour raccorder une pompe à vide (12), dans lequel
une extrémité du premier tuyau d'échappement (81) est raccordée au dôme de coque externe (51) à une position au-dessus du plafond de vaigrage (6) de sorte à communiquer avec la région supérieure (31) de l'espace sous vide (30) et
l'orifice d'échappement du second tuyau d'échappement (82) est situé entre une paire de selles (25) supportant la partie principale de coque externe (51).

2. Navire (1) selon la revendication 1, comprenant en outre une pluralité d'indicateurs de vide supérieures (91) qui sont fixés au dôme de coque externe (52) à des positions au-dessus du plafond de vaigrage (6) et détectent un degré de vide dans la région supérieure (31) de l'espace sous vide (30), dans lequel
la pluralité d'indicateurs de vide supérieurs (91) sont agencés à des intervalles angulaires égaux autour du dôme de coque externe (52).

3. Navire (1) selon la revendication 1 ou 2, dans lequel
la partie principale de coque externe (51) présente une forme cylindrique, une direction axiale de celle-ci étant parallèle à une direction de longueur de navire et la paire de selles (25) sont espacées l'une de l'autre dans la direction de longueur de navire et
le navire (1) comprend en outre une pluralité d'indicateurs de vide inférieurs (92) qui sont fixés à la partir principale de coque externe (51) sur les deux côtés de la paire de selles (25) et détectent un degré de vide dans la région inférieure (32) de l'espace sous vide (30).
